# EUROPÄISCHE PATENTSCHRIFT

(11) **EP 3 536 977 B1**
(45) Veröffentlichungstag und Bekanntmachung des Hinweises auf die Patenterteilung: **24.08.2022**
(21) Anmeldenummer: 19161213.4
(22) Anmeldetag: 07.03.2019
(51) Int. Cl.: F15B 13/04, F16K 11/07

(54) **HYDRAULISCHE STEUERVENTILEINHEIT**
HYDRAULIC CONTROL VALVE UNIT
UNITÉ DE SOUPAPE DE COMMANDE HYDRAULIQUE

(30) Priorität: 07.03.2018 DE 102018203436
(43) Veröffentlichungstag der Anmeldung: 11.09.2019
(73) Patentinhaber: Deere & Company, Moline, IL 61265 (US)
(72) Erfinder: Meid, Michael, 68163 Mannheim (DE); Traut, Sebastian, 68163 Mannheim (DE)
(74) Vertreter: Dehnhardt, Florian Christopher

(56) Entgegenhaltungen:
- GB-A- 919 145
- US-A- 4 479 512
- US-B2- 7 578 313

## Beschreibung

Die Erfindung betrifft eine hydraulische Steuerventileinheit zur Ansteuerung einer hydraulischen Arbeitslast mit den Merkmalen des Oberbegriffs von Patentanspruch 1.

Eine derartige Steuerventileinheit weist einen axial verschiebbaren Steuerschieber auf zur Steuerung eines Hydraulikflusses, z.B. von einer an die Steuerventileinheit angeschlossenen hydraulischen Pumpe zu der ebenfalls angeschlossenen hydraulischen Arbeitslast. Unterschiedliche axiale Arbeitspositionen des Steuerschiebers dienen dazu, den Hydraulikfluss hinsichtlich Richtung und Menge zwischen der Pumpe, der Arbeitslast und einem Hydrauliktank zu regulieren bzw. zu steuern.

Eine gattungsgemäße hydraulische Steuerventileinheit geht aus der US 4 479 512 A hervor. Gemäß einer darin dargestellten Ausführungsform umfasst ein zur Beeinflussung eines hydraulischen Flusses vorgesehener Längsschieber ein Paar diametral gegenüberliegender rechteckiger Nuten, die durch radial umlaufende Steuerkanten begrenzt sind. Zusätzlich lässt sich durch Verdrehen des Längsschiebers die wirksame Länge der Steuerkanten verkürzen, wodurch zusätzlich Einfluss auf die Steuerkennlinie der Steuerventileinheit Einfluss genommen werden kann. Bezogen auf eine 360°-Abwicklung entlang der Rotationsrichtung des Längsschiebers weisen die Steuerkanten unter anderem einen stufenförmigen Verlauf auf.

Der vorliegenden Erfindung liegt die Aufgabe zugrunde, die hydraulische Funktionalität der Steuerventileinheit mit technisch einfachen Mitteln weiter zu verbessern.

Diese Aufgabe wird durch eine Steuerventileinheit mit den Merkmalen des Patentanspruchs 1 gelöst.

Gemäß Patentanspruch 1 weist die hydraulische Steuerventileinheit zur Ansteuerung einer hydraulischen Arbeitslast mehrere Hydraulikanschlüsse auf. Unter diesen Hydraulikanschlüssen sind mindestens ein Eingangsanschluss zum hydraulischen Anschluss an eine hydraulische Pumpe, welche Hydraulikflüssigkeit (z.B. Öl) durch die Steuerventileinheit zu der Arbeitslast pumpt. Weiterhin gehören zu den Hydraulikanschlüssen mindestens ein Arbeitsanschluss zum hydraulischen Anschluss der Arbeitslast und mindestens ein an einen externen Hydrauliktank bzw. Sumpf anschließbarer Rücklaufanschluss. Zur Steuerung des Hydraulikflusses zwischen den Hydraulikanschlüssen weist die Steuerventileinheit einen Steuerschieber auf, welcher in einer Axialrichtung in unterschiedliche Arbeitspositionen überführbar ist. Hierdurch kann u.a. der Systemdruck zu den Arbeitsanschlüssen gebracht werden. Dabei wirkt der Steuerschieber mit einem Schiebergehäuse zusammen, welches den Steuerschieber umgibt. Über das Schiebergehäuse können - abhängig von der jeweiligen Arbeitsposition des Steuerschiebers - einzelne Hydraulikanschlüsse miteinander hydraulisch verbunden werden.

Der Steuerschieber weist mindestens ein Steuersegment auf, welches in Axialrichtung von einer Steuerkante begrenzt ist und mit einem axialen Gehäusesegment des Schiebergehäuses zur Steuerung eines Flussquerschnittes für Hydraulikfluss an diesem Steuersegment zusammenwirkt.

Neben seiner axialen Verstellbarkeit ist der Steuerschieber um eine Rotationsachse, welche insbesondere parallel zur Axialrichtung verläuft, in Rotationsrichtung rotatorisch antreibbar. Die Steuerkante mindestens eines Steuersegments und/oder das mit diesem Steuersegment zusammenwirkende Gehäusesegment ist derart ausgebildet, dass der Flussquerschnitt für Hydraulikfluss an diesem Steuersegment abhängig von unterschiedlichen Rotationspositionen des Steuerschiebers unterschiedlich groß ist.

Der geometrische Verlauf der Steuerkante ist derart, dass diese in Rotationsrichtung abschnittsweise mindestens einen axial äußeren Kantenabschnitt und mindestens einen axial inneren Kantenabschnitt aufweist. Dabei ist der axial innere Kantenabschnitt relativ zum axial äußeren Kantenabschnitt axial nach innen versetzt, wodurch das Steuersegment im Bereich des inneren Kantenabschnitts eine geringere Axialerstreckung als im Bereich des äußeren Kantenabschnitts aufweisen kann.

Diese axial versetzte Anordnung von Kantenabschnitten der Steuerkante kann durch unterschiedliche Geometrien realisiert werden, beispielsweise durch gerade Linienabschnitte oder durch wellenförmige, insbesondere sinusförmige, Linienabschnitte.

Der gewünschte ungleichmäßige geometrische Verlauf der Steuerkante entlang der Rotationsrichtung wird konstruktionstechnisch einfach beispielsweise dadurch unterstützt, dass sich der axial innere Kantenabschnitt oder sämtliche axial inneren Kantenabschnitte weniger als 180° bezogen auf eine 360°-Abwicklung des Auslass-Steuersegments entlang der Rotationsrichtung erstreckt oder erstrecken.

Vorliegend verläuft der axial innere Kantenabschnitt entlang der Rotationsrichtung zumindest teilweise in einem Winkel größer 0° und kleiner 90° zur Rotationsrichtung. Hierdurch kann der Flussquerschnitt stufenlos und folglich noch variabler eingestellt werden. Beispielsweise kann dies genutzt werden, um innerhalb derselben Betriebsstellung der Steuerventileinheit bedarfsweise den Flussquerschnitt an einem Steuersegment zu verändern, wenn der Hydraulikfluss bzw. der Volumenstrom beeinflusst werden soll.

Ein- und dieselbe axiale Arbeitsposition des Steuerschiebers kann folglich mehrere unterschiedliche rotatorische Arbeitspositionen des Steuerschiebers an einem Steuersegment mit entsprechend unterschiedlichen hydraulischen und technischen Effekten beinhalten.

Mit anderen Worten ermöglichen unterschiedliche Rotationspositionen einer geometrisch entsprechend ausgebildeten Steuerkante und/oder eines geometrisch entsprechend ausgebildeten Gehäusesegments unterschiedliche Flussquerschnitte für den Hydraulikfluss an diesem Steuersegment.

Hierdurch können mit einem einzigen Steuerschieber die Funktionalitäten (z.B. Einstellung hydraulisch-physikalischer Größen, hydraulisches Ansprechverhalten, Steuerung des Volumenstroms oder der durchfließenden Hydraulikmenge, Anzahl unterschiedlicher hydraulischer Betriebsstellungen/-zustände) der Steuerventileinheit erweitert werden. Der verwendete Steuerschieber sorgt dafür, dass diese Funktionserweiterung gegenüber herkömmlichen Steuerventileinheiten mit geringem technischen Aufwand und somit kostengünstig geschaffen werden kann.

Zusammengefasst können Flussquerschnitte für Hydraulikfluss zwischen den Hydraulikanschlüssen während des Arbeitsbetriebs der Ventilsteuereinheit unterschiedlich eingestellt werden, indem eine geeignete geometrische Dimensionierung der Steuerkante mindestens eines Steuersegments und/oder eine geeignete geometrische Dimensionierung des mit diesem Steuersegment zusammenwirkenden axialen Gehäusesegments des Schiebergehäuses bereitgestellt wird.

Für die Einstellung unterschiedlicher Funktionalitäten der Steuerventileinheit sind definierte Rotationswinkel vorgesehen, um die der Steuerschieber mittels einer geeigneten Antriebseinheit angetrieben wird. Abhängig von der jeweiligen technischen Anwendung der Steuerventileinheit können die axialen Verstellwege, die Flussquerschnitte und die Rotationswinkel des Steuerschiebers unterschiedlich sein, um die gewünschten Funktionalitäten der Steuerventileinheit zu realisieren.

Weitere vorteilhafte Ausgestaltungen der erfindungsgemäßen Steuerventileinheit gehen aus den Unteransprüchen hervor.

Vorzugsweise weist der Steuerschieber mehrere in Axialrichtung verteilt angeordnete Steuersegmente auf. An mindestens einem dieser Steuersegmente ist der Flussquerschnitt für Hydraulikfluss abhängig von unterschiedlichen Rotationspositionen des Steuerschiebers unterschiedlich groß. Hierdurch kann für unterschiedliche Steuerventileinheiten mit unterschiedlichen Funktionalitäten jeweils ein geeigneter Steuerschieber bereitgestellt werden.

Insbesondere weist der Steuerschieber mindestens zwei Steuersegmente auf, von denen mindestens ein Steuersegment einen konstanten Flussquerschnitt für Hydraulikfluss bei unterschiedlichen Rotationspositionen des Steuerschiebers ermöglicht. Ein derartiger Steuerschieber schafft die Voraussetzung dafür, dass bei unverändertem Flussquerschnitt an mindestens einem Steuersegment unterschiedlich große Flussquerschnitte an mindestens einem weiteren Steuersegment des Steuerschiebers bereitgestellt werden können. Die Variationsmöglichkeiten bezüglich der hydraulischen Funktionalität der Steuerventileinheit sind hierdurch weiter vergrößert.

Ein unveränderter Flussquerschnitt an einem Steuersegment bei unterschiedlichen Flussquerschnitten an mindestens einem weiteren Steuersegment infolge von Rotationsbewegungen des Steuerschiebers lässt sich insbesondere dadurch realisieren, dass die Steuerkante des Steuersegments entlang der Umfangsrichtung bzw. Rotationsrichtung teilweise oder vollständig einen regelmäßigen Verlauf, z.B. eine regelmäßige Zickzack-Linie, aufweist.

Das erläuterte Konzept unterschiedlicher Flussquerschnitte für Hydraulikfluss an einem Steuersegment bei unterschiedlichen Rotationspositionen des Steuerschiebers lässt sich auf funktional unterschiedliche Steuersegmente innerhalb einer Steuerventileinheit anwenden.

Vorzugsweise handelt es sich bei einem Steuersegment um ein Regel-Steuersegment, welches in einem Mündungsbereich des Schiebergehäuses angeordnet ist. Dieser Mündungsbereich verbindet den Eingangsanschluss oder einen daran unmittelbar anschließenden Verbindungskanal mit dem Schiebergehäuse. Das Regel-Steuersegment kann den vom Eingangsanschluss kommenden Hydraulikfluss regeln. Je nach gewünschter Funktionalität kann bei Rotationsbewegungen des Steuerschiebers an dem Regel-Steuersegment ein konstanter oder unterschiedlich großer Flussquerschnitt für Hydraulikfluss realisiert werden. Beispielsweise liegt bei rotierendem Steuerschieber an dem Regel-Steuersegment ein konstanter Flussquerschnitt an, während an mindestens einem weiteren Steuersegment der Flussquerschnitt unterschiedlich groß ist. Somit können bei konstanten hydraulischen Verhältnissen am Regel-Steuersegment unterschiedliche Funktionalitäten, z.B. ein stufenloses Vergrößern des Flussquerschnittes oder ein Androsseln, im Bereich weiterer Steuersegmente verwirklicht werden.

Beispielsweise kann durch Drehen bzw. Rotieren des Steuerschiebers in einer axialen Arbeitsposition erreicht werden, dass bei unverändertem Flussquerschnitt am Regel-Steuersegment der Flussquerschnitt an einem zwischen Arbeitsanschluss und Rücklaufanschluss angeordneten sogenannten Auslass-Steuersegment vergrößert wird, um einen hydraulischen Rückstaudruck in Richtung des Rücklaufanschlusses und des Hydrauliktanks zu reduzieren. Umgekehrt kann bei einer entsprechenden Rotation des Steuerschiebers der Flussquerschnitt am Auslass-Steuersegment gezielt verkleinert werden, um ein Androsseln in Richtung des Hydrauliktanks zu erzielen. Hierbei entsteht ein erhöhter Rückstaudruck, der strömungsbedingte Saugeffekte und folglich Beanspruchungen von Dichtungen und anderen Bestandteilen der Steuerventileinheit reduzieren oder vermeiden kann.

Unterschiedliche Funktionen oder Zustände der Steuerventileinheit lassen sich auch erzielen, wenn der Flussquerschnitt am Regel-Steuersegment gleich Null ist und somit geschlossen bleibt, d.h. wenn Hydraulikflüssigkeit vom Eingangsanschluss her kommend am Regel-Steuersegment nicht weiterfließen kann. Beispielsweise kann dann durch Rotation des Steuerschiebers an dem bereits genannten Auslass-Steuersegment ein Flussquerschnitt geöffnet werden, so dass der Arbeitsanschluss und der Rücklaufanschluss miteinander hydraulisch verbunden sind. Dieses Prinzip lässt sich auf einen zweiten Arbeitsanschluss und einen zweiten Rücklaufanschluss mittels eines weiteren Auslass-Steuersegments erweitern. Auf diese Weise können sogenannte Schwimmstellungen der Steuerventileinheit allein durch Rotation des Steuerschiebers direkt erreicht werden, ohne dass der Steuerschieber durch axiale Verstellung erst an anderen Funktionsstellungen bzw. axiale Arbeitspositionen vorbeigeführt werden muss, bevor er in die Schwimmstellung gelangt.

In einer weiteren Variante des Regel-Steuersegments kann beim Drehen bzw. Rotieren des Steuerschiebers in einer axialen Arbeitsposition der Flussquerschnitt am Regel-Steuersegment unterschiedlich groß sein. Hierdurch erhält die Steuerventileinheit eine größere Durchflussöffnung im Mündungsbereich des Schiebergehäuses, kleinere Druckverluste und folglich einen höheren Wirkungsgrad. Bei dieser Variante ist vorzugsweise an mindestens einem weiteren vorhandenen Steuersegment (z.B. das vorgenannte Auslass-Steuersegment) der Flussquerschnitt konstant, so dass dort keine spezifische Geometrie der Steuerkante und/oder des Gehäusesegments für unterschiedliche Flussquerschnitte beim Rotieren des Steuerschiebers erforderlich ist.

Die obigen Erläuterungen des Regel-Steuersegments mit entweder konstantem oder unterschiedlichem Flussquerschnitt bei rotierendem Steuerschieber und einer Kombination mit weiteren Steuersegmenten lässt sich sinngemäß auf andere Steuersegmente eines Steuerschiebers anwenden. Beispielsweise handelt es sich dabei um ein sogenanntes Einlass-Steuersegment, welches hydraulisch vor dem Arbeitsanschluss angeordnet ist und Hydraulikfluss hin zum Arbeitsanschluss steuern kann. Bei einer weiteren Anwendung handelt es sich bei dem Steuersegment um ein sogenanntes Auslass-Steuersegment, welches hydraulisch zwischen dem Arbeitsanschluss und dem Rücklaufanschluss angeordnet ist und Hydraulikfluss hin zu dem Rücklaufanschluss steuern kann.

Insbesondere weist der Steuerschieber zwei Auslass-Steuersegmente auf, welche jeweils einem von zwei vorhandenen Arbeitsanschlüssen zugeordnet sind. Hierdurch kann die hydraulische Verbindung zwischen jeweils einem Arbeitsanschluss und einem zugeordneten Rücklaufanschluss gesteuert werden. Je nach gewünschter Funktionsweise der Steuerventileinheit können die beiden Auslass-Steuersegmente und deren Auslass-Steuerkanten unterschiedlich oder identisch geometrisch dimensioniert sein.

In einer bevorzugten Ausführungsform weist der Steuerschieber zwei Auslass-Steuersegmente auf, welche bezüglich einer rechtwinklig zur Axialrichtung angeordneten Symmetrieebene spiegelsymmetrisch zueinander angeordnet sind. Dies unterstützt eine fertigungstechnisch einfache Herstellung des Steuerschiebers und eine gleichmäßige Funktionsweise der Steuerventileinheit zwischen den Arbeitsanschlüssen und den Rücklaufanschlüssen.

Zur Realisierung unterschiedlicher Flussquerschnitte an einem Steuersegment bzw. an dem damit zusammenwirkenden Gehäusesegment ist vorzugsweise die Steuerkante dieses Steuersegments mit einem in Umfangsrichtung bzw. Rotationsrichtung (d.h. entlang der geometrischen Abwicklung) ungleichmäßigen bzw. asymmetrischen geometrischen Verlauf vorgesehen - im Gegensatz zu einer symmetrischen Steuerkante, welche bei einer Rotation des Steuerschiebers unabhängig vom Rotationswinkel immer ein gleichmäßiges Strömungsverhalten bzw. einen gleichgroßen Flussquerschnitt an diesem Steuersegment bewirken würde.

In einer bevorzugten Ausführungsform verläuft der axial innere Kantenabschnitt entlang der Rotationsrichtung teilweise oder vollständig parallel zur Rotationsrichtung. Dies unterstützt eine fertigungstechnisch einfache Herstellung des Steuersegments für unterschiedlich große Flussquerschnitte.

Unterschiedliche Flussquerschnitte an einem Steuersegment bzw. an dessen zusammenwirkendem Gehäusesegment durch unterschiedliche Rotationspositionen des Steuerschiebers können auch erzielt werden, wenn die geometrische Konstruktion des zusammenwirkenden axialen Gehäusesegments entsprechend ausgestaltet ist. Dies kann unabhängig von oder in Kombination mit einer spezifischen Steuerkanten-Geometrie erfolgen. Eine derartige Anpassung besteht insbesondere darin, dass das mit dem Steuersegment zusammenwirkende Gehäusesegment, insbesondere im Bereich des bereits genannten axial inneren Kantenabschnitts der Steuerkante, eine größere Axialerstreckung aufweist als die größte Axialerstreckung des Steuersegments.

Funktionalitäten der Steuerventileinheit werden insbesondere durch mindestens eines der folgenden Mittel gesteuert:
ein Bedienhebel für einen Benutzer, eine elektronische Steuereinheit, Signale eines elektronischen Busses (z.B. CAN-Bus),
ein Schrittmotor.

Vorzugsweise wandelt der Schrittmotor elektronische Eingangssignale in proportionale Ausgangssignale bzw. in mechanische Bewegungen um. Hierbei ist der Schrittmotor mit dem Steuerschieber auf geeignete Weise (z.B. mittels einer Zahnstange) gekoppelt, um den Steuerschieber in unterschiedliche axiale Arbeitspositionen zu überführen. Derselbe Schrittmotor oder alternativ eine zusätzliche geeignete Antriebseinheit (z.B. Schrittmotor, Spindelantrieb) treibt den Steuerschieber in Rotationsrichtung rotatorisch an. Vorzugsweise sind unterschiedlichen Funktionalitäten der Steuerventileinheit jeweils definierte Rotationswinkel des Steuerschiebers zugeordnet, welche von der Antriebseinheit ausgeführt werden.

Vorzugsweise ist die Steuerventileinheit in ein landwirtschaftliches Fahrzeug, insbesondere Traktor, eingebaut und wirkt dort als ein hydraulisches Steuergerät. Verschiedene hydraulische Lasten (z.B. Hydromotor, Frontlader, Kraftheber, Düngerstreuer, weitere Anbaugeräte) am landwirtschaftlichen Fahrzeug können hierdurch mit den Vorteilen der erfindungsgemäßen Steuerventileinheit angesteuert werden. Beispielsweise werden an solchen Lasten Effizienzsteigerungen durch reduzierte Rückstaudrücke erzielt. Bei bestimmten Lasten (z.B. Frontlader) können technisch einfach etwaige Kavitationen vermieden werden.

Die erfindungsgemäße Steuerventileinheit wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine Draufsicht einer teilweise dargestellten nicht zur Erfindung gehörenden Steuerventileinheit mit Blick auf wesentliche Bestandteile innerhalb des Steuerventilgehäuses der Steuerventileinheit,
- Fig. 2: eine perspektivische Teildarstellung des in der Steuerventileinheit verwendeten Steuerschiebers in einer ersten nicht zur Erfindung gehörenden Ausführungsform,
- Fig. 3a: eine vergrößerte Abwicklung eines Regel-Steuersegments gemäß Detail III-A in Fig. 1,
- Fig. 3b: eine vergrößerte Abwicklung eines ersten Auslass-Steuersegments gemäß Detail III-B in Fig. 1,
- Fig. 3c: eine vergrößerte Abwicklung eines zweiten Auslass-Steuersegments gemäß Detail III-C in Fig. 1,
- Fig. 4: drei Axialabschnitte eines Schiebergehäuses als jeweils eine Abwicklung eines Gehäusesegments, welches mit dem jeweils zugeordneten Steuersegment gemäß Fig. 3a bzw. Fig. 3b bzw. Fig. 3c zusammenwirkt,
- Fig. 5: die Abwicklungen gemäß Fig. 3a, Fig. 3b, Fig. 3c und Fig. 4 in einer ersten Arbeitsposition des Steuerschiebers,
- Fig. 6: die Abwicklungen gemäß Fig. 3a, Fig. 3b, Fig. 3c und Fig. 4 in einer weiteren Arbeitsposition des Steuerschiebers,
- Fig. 7: die Abwicklungen gemäß Fig. 3a, Fig. 3b, Fig. 3c und Fig. 4 in einer weiteren Arbeitsposition des Steuerschiebers,
- Fig. 8: die Abwicklungen gemäß Fig. 3a, Fig. 3b, Fig. 3c und Fig. 4 in einer weiteren Arbeitsposition des Steuerschiebers,
- Fig. 9: die Abwicklungen gemäß Fig. 3a, Fig. 3b, Fig. 3c und Fig. 4 der ersten Arbeitsposition des Steuerschiebers gemäß Fig. 5, jedoch in einer weiteren Ausführungsform des Schiebergehäuses,
- Fig. 10: die Abwicklungen gemäß Fig. 9 in einer weiteren Arbeitsposition des Steuerschiebers,
- Fig. 11: die Abwicklung des ersten Auslass-Steuersegments in einer zur Erfindung gehörenden Ausführungsform, und
- Fig. 12: die Abwicklung des ersten Auslass-Steuersegments in einer weiteren nicht zur Erfindung gehörenden Ausführungsform.

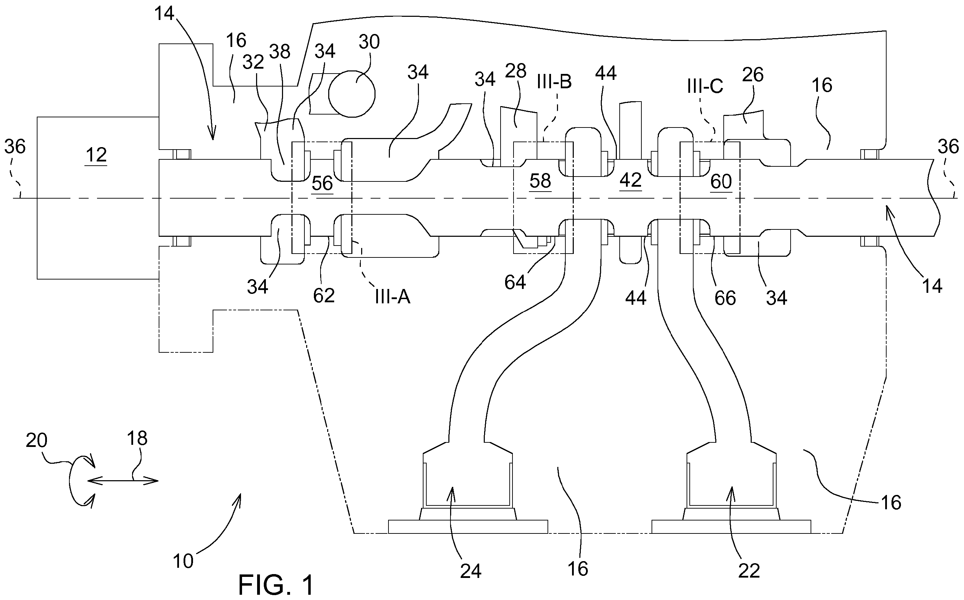

Fig. 1 zeigt eine nicht zur Erfindung gehörende Steuerventileinheit 10 mit einer lediglich schematisch dargestellten Antriebseinheit 12 zum Antrieb eines Steuerschiebers 14. Außerhalb der Antriebseinheit 12 ist ein Steuerventilgehäuse 16 der Steuerventileinheit 10 geöffnet und gibt einen Blick auf wesentliche Bestandteile der Steuerventileinheit 10 frei.

Die Antriebseinheit 12 enthält mindestens einen Schrittmotor für den Antrieb des Steuerschiebers 14. Abhängig von seiner Ansteuerung ist der Steuerschieber 14 in einer Axialrichtung 18 translatorisch und um eine parallel zur Axialrichtung verlaufende Rotationsachse 36 in Rotationsrichtung 20 rotatorisch antreibbar. An dem Steuerventilgehäuse 16 sind zwei Arbeitsanschlüsse 22, 24 für den hydraulischen Anschluss einer hier nicht dargestellten hydraulischen Arbeitslast (z.B. ein doppelt wirkender Zylinder) angeordnet. Der erste Arbeitsanschluss 22 korrespondiert mit der Funktion "Zylinder ausfahren" bezüglich der Arbeitslast, während der zweite Arbeitsanschluss 24 mit der Funktion "Zylinder einfahren" bezüglich der Arbeitslast korrespondiert. Abhängig von bestimmten Arbeitspositionen des Steuerschiebers 14 sind zwei Rücklaufanschlüsse 26, 28 mit den Arbeitsanschlüssen 22, 24 hydraulisch verbindbar. Beide Rücklaufanschlüsse 26, 28 sind an einen externen, hier nicht dargestellten Hydrauliktank bzw. Sumpf für Hydraulikflüssigkeit (z.B. Öl) angeschlossen. Ein Eingangsanschluss 30 ist an eine hier nicht dargestellte hydraulische Pumpe angeschlossen, welche Hydraulikflüssigkeit von dem Hydrauliktank hin zur Steuerventileinheit 10 fördert. Der Eingangsanschluss 30 ist über einen Verbindungskanal 32 mit einem Mündungsbereich 38 des Schiebergehäuse 34 hydraulisch verbunden. Das Schiebergehäuse 34 umgibt den Steuerschieber 14 in dessen Umfangsrichtung, d.h. in Rotationsrichtung 20 mit einem Radialabstand. Der Radialabstand variiert in Axialrichtung 18 zwischen einem Minimum, um eine Axialbeweglichkeit des Steuerschiebers 14 relativ zum Schiebergehäuse 34 zu gewährleisten, und größeren Radialabständen, welche einen Durchfluss von Hydraulikflüssigkeit durch das Schiebergehäuse 34 ermöglichen. Somit können der Eingangsanschluss 30, die Arbeitsanschlüsse 22, 24 und die Rücklaufanschlüsse 26, 28 abhängig von der gewünschten Funktionalität der Steuerventileinheit 10 und der jeweiligen axialen und/oder rotatorischen Arbeitsposition des Steuerschiebers 14 miteinander hydraulisch verbunden werden.

Die Antriebseinheit 12 bzw. deren Schrittmotor ist antriebsmäßig (z.B. über eine Zahnstange) mit dem Steuerschieber 14 verbunden. Die Antriebseinheit 12 wandelt elektronische Eingangssignale in mechanische Bewegungen des Steuerschiebers 14 um. Diese mechanischen Bewegungen sind zum einen Linear- bzw. Axialbewegungen in Axialrichtung 18 und zum anderen Rotationsbewegungen um die Rotationsachse 36 entlang der Rotationsrichtung 20. Dabei nutzt die Antriebseinheit 12 für die Axial- und Rotationsbewegungen des Steuerschiebers 14 entweder denselben Schrittmotor oder der Schrittmotor generiert die Axialbewegungen, während ein weiterer Antrieb (z.B. weiterer Schrittmotor, Spindelantrieb, etc.) die Rotationsbewegungen erzeugt.

Bezüglich der Funktionalitäten der Steuerventileinheit 10 bewegt die Antriebseinheit 12 den Steuerschieber 14 in verschiedene Betriebsstellungen, beispielsweise Neutralstellung, Ausfahrstellung (Zylinder ausfahren), Einfahrstellung (Zylinder einfahren), Schwimmstellung und ggf. weitere einstellbare Zwischenstellungen. Hierdurch kann der Hydraulikfluss hinsichtlich Flussrichtung und Flussmenge zwischen dem Eingangsanschluss 30, den Arbeitsanschlüssen 22, 24 und den Rücklaufanschlüssen 26, 28 gesteuert und reguliert werden.

Im Betriebszustand "Ausfahrstellung" ist der Steuerschieber 14 gegenüber der Position in Fig. 1 axial nach links bewegt. Hierdurch kann Hydraulikflüssigkeit vom Eingangsanschluss 30 über den Mündungsbereich 38, zwischen dem Steuerschieber 14 und dem Schiebergehäuse 34 zum ersten Arbeitsanschluss 22 fließen. Hydraulikflüssigkeit vom zweiten Arbeitsanschluss 24 kann zwischen dem Steuerschieber 14 und dem Schiebergehäuse 34 sowie über den zugeordneten Rücklaufanschluss 28 zum Hydrauliktank fließen. Im Betriebszustand "Einfahrstellung" ist der Steuerschieber 14 gegenüber der Position in Fig. 1 axial nach rechts bewegt. In dieser Position des Steuerschiebers 14 kann Hydraulikflüssigkeit vom Eingangsanschluss 30 über den Mündungsbereich 38, zwischen dem Steuerschieber 14 und dem Schiebergehäuse 34 zum zweiten Arbeitsanschluss 24 fließen. Hydraulikflüssigkeit vom ersten Arbeitsanschluss 22 kann zwischen dem Steuerschieber 14 und dem Schiebergehäuse 34 sowie über den zugeordneten Rücklaufanschluss 26 zum Hydrauliktank fließen.

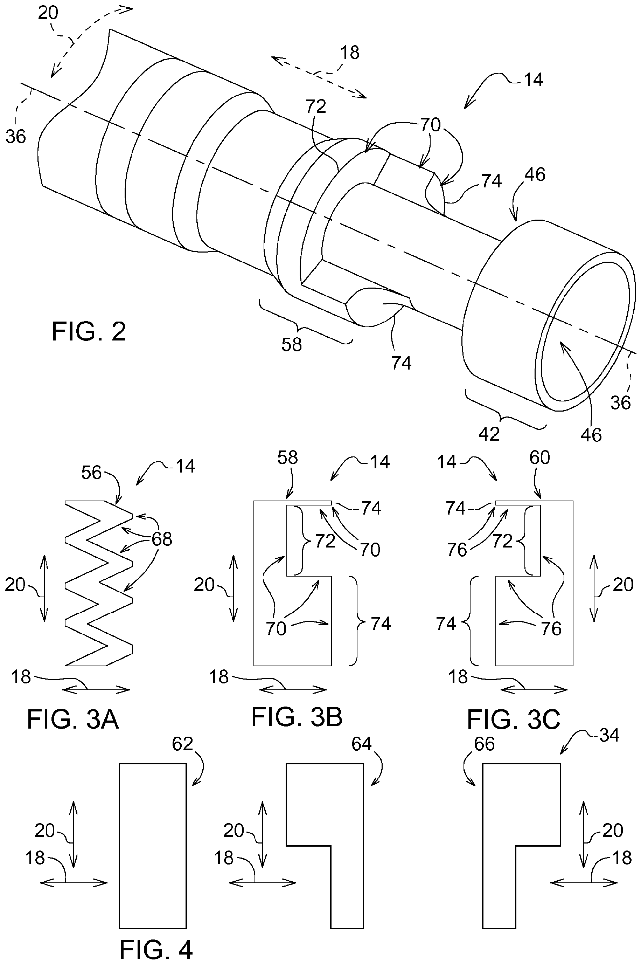

In Fig. 2 ist der Steuerschieber 14 ausschnittsweise mit einem Auslass-Steuersegment 58 und mit einem Einlass-Steuersegment 42 dargestellt. Entlang der Axialrichtung 18 weist der Steuerschieber 14 gemäß Fig. 1 ein Regel-Steuersegment 56, das bereits genannte Auslass-Steuersegment 58, das ebenfalls bereits genannte Einlass-Steuersegment 42 sowie ein weiteres Auslass-Steuersegment 60 auf.

Die Steuersegmente 56, 58, 60 sind in Fig. 3a, Fig. 3b und Fig. 3c als 360°-Abwicklungen entlang der Rotationsrichtung 20 bzw. der Umfangsrichtung des Steuerschiebers 14 dargestellt. Die einzelnen Steuersegmente 56, 58, 60 sind in Fig. 1 jeweils im Bereich der Details III-A bzw. III-B bzw. III-C angeordnet. Dabei ist das Auslass-Steuersegment 58 in der hydraulischen Verbindung zwischen dem zweiten Arbeitsanschluss 24 und dem zugeordneten Rücklaufanschluss 28 angeordnet, während das Auslass-Steuersegment 60 in der hydraulischen Verbindung zwischen dem ersten Arbeitsanschluss 22 und dem zugeordneten Rücklaufanschluss 26 angeordnet ist.

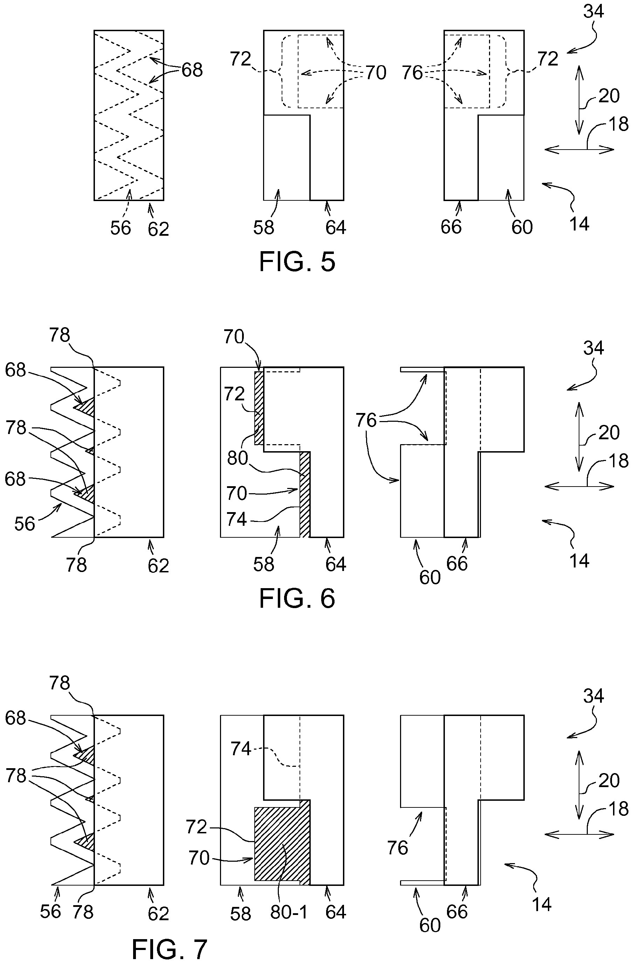

Die beiden Auslass-Steuersegmente 58, 60 sind in der nicht zur Erfindung gehörenden Ausführungsform gemäß Fig. 3b und Fig. 3c sowie in Fig. 5 bis Fig. 10 bezüglich einer rechtwinklig zur Axialrichtung 18 verlaufenden Symmetrieebene spiegelsymmetrisch zueinander angeordnet und aufgebaut. In weiteren, hier nicht dargestellten Ausführungsformen können die beiden Auslass-Steuersegmente 58, 60 abhängig von der technischen Anwendung und Dimensionierung der Steuerventileinheit 10 unsymmetrisch zueinander angeordnet und unterschiedlich aufgebaut sein.

Das Schiebergehäuse 34 weist ein Regel-Gehäusesegment 62, ein Einlass-Gehäusesegment 44 und zwei Auslass-Gehäusesegmente 64, 66 auf. Abhängig von axialen und/oder rotatorischen Positionsänderungen des Steuerschiebers 14 kann der Hydraulikfluss (insbesondere Durchflussmenge der Hydraulikflüssigkeit, Volumenstrom, etc.) an den Gehäusesegmenten 44, 62, 64, 66 gesteuert werden.

Die Steuersegmente 42, 56, 58, 60 wirken jeweils mit einem der Gehäusesegmente 44, 62, 64, 66 zusammen, um den Flussquerschnitt für Hydraulikflüssigkeit an dem jeweiligen Gehäusesegment 44, 62, 64, 66 zu steuern, d.h. zu vergrößern oder zu reduzieren, wobei die Reduzierung bis Null gehen kann. Dabei sind die Steuersegmente 42, 56, 58, 60 in Axialrichtung 18 jeweils von mindestens einer Steuerkante 46, 68, 70, 76 begrenzt. Deren spezifischer Verlauf kann je nach geometrischer Ausgestaltung entlang der Rotationsrichtung 20 den Flussquerschnitt beeinflussen.

Das Regel-Steuersegment 56 gemäß Fig. 3a weist eine Regel-Steuerkante 68 mit einem im Wesentlichen zickzack-förmigen Verlauf entlang der Rotationsrichtung 20 auf. Das Auslass-Steuersegment 58 gemäß Fig. 3b weist eine Auslass-Steuerkante 70 auf. Letztere hat entlang der Rotationsrichtung 20 zwei axial äußere Kantenabschnitte 74 und einen demgegenüber axial nach innen versetzten axial inneren Kantenabschnitt 72.

Das Auslass-Steuersegment 60 weist eine Auslass-Steuerkante 76 auf, welche aufgrund des spiegelsymmetrischen Aufbaus des Auslass-Steuersegments 60 relativ zum Auslass-Steuersegment 58 ebenfalls die beiden axial äußeren Kantenabschnitte 74 und den axial inneren Kantenabschnitt 72 enthält. Der axial innere Kantenabschnitt 72 erstreckt sich entlang der Rotationsrichtung 0 weniger als 180° bezogen auf die 360°-Abwicklung des gesamten Auslass-Steuersegments 58 bzw. 60 entlang der Rotationsrichtung 20. Dabei verläuft der axial innere Kantenabschnitt 72 parallel zur Rotationsrichtung 20.

Von den in Fig. 1 dargestellten Gehäusesegmenten 44, 62, 64, 66 sind in Fig. 4 - analog zu den Steuersegmenten 56, 58, 60 in Fig. 3a, Fig. 3b und Fig. 3c - die Gehäusesegmente 62, 64, 66 wiederum als 360°-Abwicklungen entlang der Rotationsrichtung 20 dargestellt.

Das Regel-Steuersegment 56 ist im Mündungsbereich 38 des Schiebergehäuses 34 angeordnet. Abhängig von einer eingestellten Arbeitsposition des Steuerschiebers 14 und somit einer axialen Relativposition des Regel-Steuersegments 56 relativ zum Regel-Gehäusesegment 62 beeinflusst die Regel-Steuerkante 68, ob und wieviel Hydraulikflüssigkeit von dem Eingangsanschluss 30 her durch das Regel-Steuersegment 62 hindurchfließt.

Das Auslass-Steuersegment 58 ist dem zweiten Arbeitsanschluss 24 und dem Rücklaufanschluss 28 zugeordnet, während das Auslass-Steuersegment 60 dem ersten Arbeitsanschluss 22 und dem Rücklaufanschluss 26 zugeordnet ist. Abhängig von der jeweiligen axialen und/oder rotatorischen Relativposition des Auslass-Steuersegments 58 bzw. 60 relativ zum Auslass-Gehäusesegment 64 bzw. 66 beeinflusst die Auslass-Steuerkante 70 bzw. 76, ob und wieviel Hydraulikflüssigkeit durch das Auslass-Steuersegment 64 bzw. 66 hindurch zum Arbeitsanschluss 24 bzw. 22 und/oder zum Rücklaufanschluss 28 bzw. 26 fließt.

In Fig. 5 sind die Positionen des Regel-Steuersegments 56 und der Auslass-Steuersegmente 58, 60 derart, dass durch die jeweiligen Gehäusesegmente 62, 64, 66 keine Hydraulikflüssigkeit fließt. Der Flussquerschnitt für den Hydraulikfluss an den Gehäusesegmenten 62, 64, 66 ist deshalb gleich Null. Diese Arbeitsposition des Steuerschiebers 14 entspricht insbesondere einem Betriebszustand "Neutralstellung" der Steuerventileinheit 10.

Ausgehend von Fig. 5 ist der Steuerschieber 14 in Fig. 6 axial nach links verschoben worden. Eine Rotationsbewegung des Steuerschiebers 14 wurde nicht durchgeführt. An dem Regel-Gehäusesegment 62 entsteht deshalb ein Regel-Flussquerschnitt 78 größer Null. Die Gesamtfläche des Regel-Flussquerschnittes 78 entspricht der Summe der fünf schraffiert dargestellten Dreieckflächen. Die axiale Verschiebung des Steuerschiebers 14 gemäß Fig. 6 hat an dem Auslass-Gehäusesegment 64 einen Auslass-Flussquerschnitt 80 größer Null zur Folge, dessen Querschnittsfläche sich durch die beiden schraffierten Rechteckflächen ergibt. Die Arbeitsposition des Steuerschiebers 14 gemäß Fig. 6 bewirkt beispielsweise einen Hydraulikfluss von dem Eingangsanschluss 30 zum ersten Arbeitsanschluss 22 und einen Hydraulikfluss von dem zweiten Arbeitsanschluss 24 zu dem Rücklaufanschluss 28.

Ausgehend von Fig. 5 ist der Steuerschieber 14 in Fig. 7 axial nach links verschoben worden und entlang der Rotationsrichtung 20 um 180° gedreht worden. Hierdurch entsteht im Vergleich zu Fig. 6 in Fig. 7 an dem Auslass-Gehäusesegment 64 ein größerer Auslass-Flussquerschnitt 80-1, der in Fig. 7 als schraffierte Fläche dargestellt ist. Die Größe des Regel-Flussquerschnitts 78 bleibt aufgrund des in Rotationsrichtung 20 gleichmäßigen, symmetrischen Verlaufs der Regel-Steuerkante 68 unverändert. Hierdurch lässt sich beispielsweise bei unveränderten hydraulischen Verhältnissen an dem Regel-Steuersegment 62 bedarfsweise der Hydraulikflussquerschnitt zwischen dem zweiten Arbeitsanschluss 24 und dem Rücklaufanschluss 28 erhöhen. Innerhalb dieser hydraulischen Verbindung werden folglich der Durchflusswiderstand und der Rückstaudruck verringert.

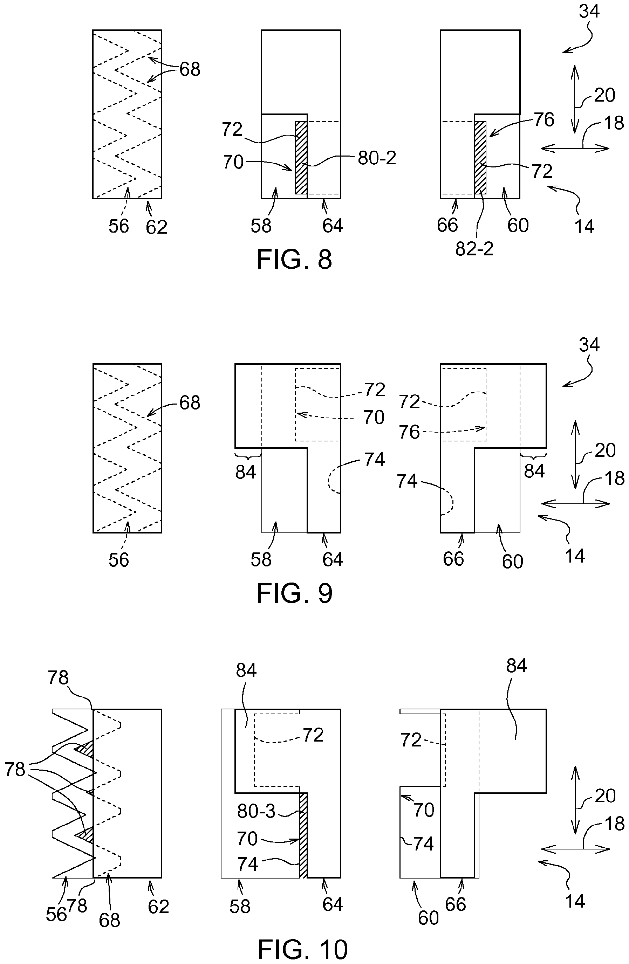

Ausgehend von Fig. 5 ist der Steuerschieber 14 in Fig. 8 entlang der Rotationsrichtung 20 um 180° gedreht worden. Am Regel-Gehäusesegment 62 bleibt der Hydraulikfluss deshalb gesperrt bzw. unterbrochen. Jedoch ist durch die Rotationsbewegung des Steuerschiebers 14 an den Auslass-Gehäusesegmenten 64 bzw. 66 jeweils ein Flussquerschnitt 80-2 bzw. 82-2 realisiert worden. Hierdurch sind der erste Arbeitsanschluss 22 und der Rücklaufanschluss 26 miteinander hydraulisch verbunden sowie der zweite Arbeitsanschluss 24 und der Rücklaufanschluss 28 miteinander hydraulisch verbunden. Beide Arbeitsanschlüsse 22, 24 sind somit über den an die Rücklaufanschlüsse 26, 28 angeschlossenen Hydrauliktank miteinander hydraulisch verbunden. Die Arbeitsposition des Steuerschiebers 14 gemäß Fig. 8 kann somit beispielsweise eine Schwimmstellung als Betriebsstellung der Steuerventileinheit 10 mit einer einzigen Rotationsbewegung erzielen. Folglich werden herkömmlich notwendige, raumaufwändige axiale Positionsänderungen des Steuerschiebers 14 mit einem Überqueren anderer Betriebsstellungen vermieden, wenn eine Funktionalität gemäß Fig. 8 (z.B. Schwimmstellung) für die Steuerventileinheit 10 eingestellt werden soll.

Im Vergleich zu dem Schiebergehäuse 34 gemäß Fig. 5 sind bei der nicht zur Erfindung gehörenden Ausführungsform gemäß Fig. 9 die Auslass-Gehäusesegmente 64, 66 in Axialrichtung 18 länger dimensioniert. Hierbei sind die Auslass-Gehäusesegmente 64, 66 jeweils im Bereich des axial inneren Kantenabschnitts 72 durch einen Gehäuseüberstand 84 axial verlängert. Die Auslass-Gehäusesegmente 64, 66 weisen somit im Bereich des axial inneren Kantenabschnitts 72 eine größere Axialerstreckung auf als die größte Axialerstreckung der Auslass-Steuersegmente 58, 60.

Ausgehend von der Arbeitsposition gemäß Fig. 9 kann der Steuerschieber 14 axial nach links transportiert werden, um den gleichen Regel-Flussquerschnitt 78 zu realisieren (Fig. 10) wie in Fig. 6. Aufgrund des Gehäuseüberstands 84 ist allerdings der Auslass-Flussquerschnitt 80-3 am Auslass-Gehäusesegment 64 gemäß Fig. 10 kleiner als der Auslass-Flussquerschnitt 80 am Auslass-Gehäusesegment 64 gemäß Fig. 6. Mit dem reduzierten Auslass-Flussquerschnitt 80-3 kann eine Androsselung des Hydraulikflusses im Bereich des Rücklaufanschlusses 28 und in Richtung des daran angeschlossenen Hydrauliktanks erreicht werden. Dies bewirkt einen erhöhten Rückstaudruck und vermeidet etwaige Saugeffekte in hydraulischen Leitungswegen innerhalb der Steuerventileinheit 10.

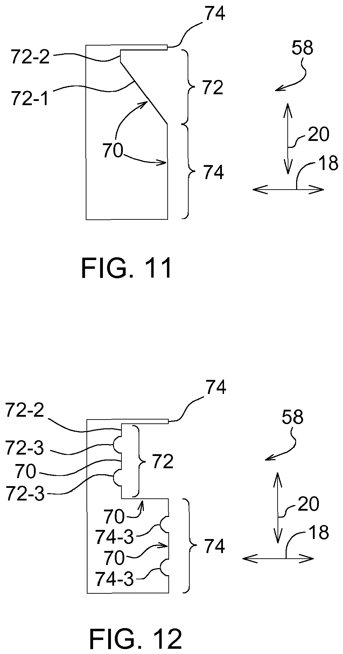

Fig. 11 zeigt eine zur Erfindung gehörende Ausführungsform des Auslass-Steuersegments 58. Bei dieser Variante weist der axial innere Kantenabschnitt 72 der Auslass-Steuerkante 70 zwei in Rotationsrichtung 20 aufeinanderfolgende Unterabschnitte 72-1, 72-2 auf. Der Unterabschnitt 72-1 verläuft als gerade Strecke in einem Winkel größer 0° und kleiner 90° (in Fig. 11 etwa 35°) relativ zur Rotationsrichtung 20. Der kürzere Unterabschnitt 72-2 verläuft parallel zur Rotationsrichtung 20.

Fig. 12 zeigt eine weitere nicht zur Erfindung gehörende Ausführungsform des Auslass-Steuersegments 58. Bei dieser Variante weisen der axial inneren Kantenabschnitt 72 und der axial äußere Kantenabschnitt 74 im Gegensatz zur Variante gemäß Fig. 3b jeweils zwei kreisbogenförmige Unterabschnitte 72-3 und 74-3 auf.

Einzelne oder sämtliche der anhand des Auslass-Steuersegments 58 offenbarten Merkmale können auch oder alternativ nur am Auslass-Steuersegment 60 realisiert sein. Darüber hinaus können in weiteren Ausführungsformen einzelne oder sämtliche anhand eines Steuersegments 42, 56, 58, 60 bzw. anhand eines Gehäusesegments 44, 62, 64, 66 geschilderten Merkmale alternativ oder zusätzlich an einem anderen offenbarten Steuersegment bzw. offenbarten Gehäusesegment verwirklicht sein.

## Patentansprüche

1. Hydraulische Steuerventileinheit (10) zur Ansteuerung einer hydraulischen Arbeitslast, mit
- mehreren Hydraulikanschlüssen (22, 24, 26, 28, 30) in Form von
-- mindestens einem Eingangsanschluss (30) zum hydraulischen Anschluss an eine Pumpe,
-- mindestens einem Arbeitsanschluss (22, 24) zum hydraulischen Anschluss der Arbeitslast, und
-- mindestens einem an einen Hydrauliktank anschließbaren Rücklaufanschluss (26, 28),
- einem in einer Axialrichtung (18) in unterschiedliche Arbeitspositionen überführbaren Steuerschieber (14) zur Steuerung von Hydraulikfluss zwischen den Hydraulikanschlüssen (22, 24, 26, 28, 30), und
- einem den Steuerschieber (14) umgebenden Schiebergehäuse (34),
wobei
- der Steuerschieber (14) mindestens ein Steuersegment (42, 56, 58, 60) aufweist, welches in Axialrichtung (18) von einer Steuerkante (46, 68, 70, 76) begrenzt ist und mit einem axialen Gehäusesegment (44, 62, 64, 66) des Schiebergehäuses (34) zur Steuerung eines Flussquerschnittes (78, 80, 80-1, 80-2, 80-3, 82-2) für Hydraulikfluss an diesem Steuersegment (42, 56, 58, 60) zusammenwirkt,
- der Steuerschieber (14) um eine Rotationsachse (36) in Rotationsrichtung (20) rotatorisch antreibbar ist, und
- die Steuerkante (70, 76) mindestens eines Steuersegments (58, 60) und/oder das mit diesem Steuersegment (58, 60) zusammenwirkende Gehäusesegment (64, 66) derart ausgebildet ist, dass der Flussquerschnitt (80, 80-1, 80-2, 80-3, 82-2) für Hydraulikfluss an diesem Steuersegment (58, 60) abhängig von unterschiedlichen Rotationspositionen des Steuerschiebers (14) unterschiedlich groß ist, wobei die Steuerkante (70, 76) in Rotationsrichtung (20) abschnittsweise
- mindestens einen axial äußeren Kantenabschnitt (74) aufweist, und
- mindestens einen axial inneren Kantenabschnitt (72) aufweist, welcher relativ zum axial äußeren Kantenabschnitt (74) axial nach innen versetzt ist, **dadurch gekennzeichnet, dass** der axial innere Kantenabschnitt (72) entlang der Rotationsrichtung (20) zumindest teilweise in einem Winkel größer 0° und kleiner 90° relativ zur Rotationsrichtung (20) verläuft.

2. Steuerventileinheit nach Anspruch 1, **dadurch gekennzeichnet, dass** der Steuerschieber (14) mehrere in Axialrichtung (18) verteilt angeordnete Steuersegmente (42, 56, 58, 60) aufweist, wobei der Flussquerschnitt (80, 80-1, 80-2, 80-3, 82-2) für Hydraulikfluss an mindestens einem Steuersegment (58, 60) abhängig von unterschiedlichen Rotationspositionen des Steuerschiebers (14) unterschiedlich groß ist.

3. Steuerventileinheit nach einem der vorhergehenden Ansprüche, **dadurch gekennzeichnet, dass** der Steuerschieber (14) mindestens zwei Steuersegmente (42, 56, 58, 60) aufweist, wobei die Steuerkante (68) mindestens eines Steuersegments (56) und/oder das mit diesem Steuersegment (56) zusammenwirkende Gehäusesegment (62) derart ausgebildet ist, dass der Flussquerschnitt (78) für Hydraulikfluss an diesem Steuersegment (56) bei unterschiedlichen Rotationspositionen des Steuerschiebers (14) konstant ist.

4. Steuerventileinheit nach einem der vorhergehenden Ansprüche, **dadurch gekennzeichnet, dass** mindestens ein Steuersegment als ein Regel-Steuersegment (56) in einem das Schiebergehäuse (34) mit dem Eingangsanschluss (30) verbindenden Mündungsbereich (38) des Schiebergehäuses (34) angeordnet ist.

5. Steuerventileinheit nach einem der vorhergehenden Ansprüche, **dadurch gekennzeichnet, dass** mindestens ein Steuersegment als ein Einlass-Steuersegment (42) hydraulisch vor dem Arbeitsanschluss (22, 24) angeordnet ist für die Steuerung von Hydraulikfluss hin zu dem Arbeitsanschluss (22, 24).

6. Steuerventileinheit nach einem der vorhergehenden Ansprüche, **dadurch gekennzeichnet, dass** mindestens ein Steuersegment als ein Auslass-Steuersegment (58, 60) hydraulisch zwischen dem Arbeitsanschluss (22, 24) und dem Rücklaufanschluss (26, 28) angeordnet ist für die Steuerung von Hydraulikfluss hin zu dem Rücklaufanschluss (26, 28).

7. Steuerventileinheit nach einem der vorhergehenden Ansprüche, **dadurch gekennzeichnet, dass** der axial innere Kantenabschnitt (72) teilweise in einem Winkel größer 0° und kleiner 90° relativ zur Rotationsrichtung (20) entlang der Rotationsrichtung (20) und teilweise parallel zur Rotationsrichtung (20) verläuft.

8. Steuerventileinheit nach einem der vorhergehenden Ansprüche, **dadurch gekennzeichnet, dass** das mit dem Steuersegment (58, 60) zusammenwirkende Gehäusesegment (64, 66) eine größere Axialerstreckung aufweist als die größte Axialerstreckung des Steuersegments (58, 60).

## Claims

1. Hydraulic control-valve unit (10) for controlling a hydraulic working load, having
- multiple hydraulic ports (22, 24, 26, 28, 30) in the form of
-- at least one entry port (30) for hydraulic connection to a pump,
-- at least one working port (22, 24) for hydraulic connection of the working load, and
-- at least one return port (26, 28), which can be connected to a hydraulic tank,
- a control slide (14), which can be transferred into different working positions in an axial direction (18) and serves for controlling hydraulic flow between the hydraulic ports (22, 24, 26, 28, 30), and
- a slide housing (34), which surrounds the control slide (14),
wherein
- the control slide (14) has at least one control segment (42, 56, 58, 60) which is delimited in an axial direction (18) by a control edge (46, 68, 70, 76) and which interacts with an axial housing segment (44, 62, 64, 66) of the slide housing (34) for the purpose of controlling a flow cross section (78, 80, 80-1, 80-2, 80-3, 82-2) for hydraulic flow at this control segment (42, 56, 58, 60),
- the control slide (14) can be driven in rotation in a direction of rotation (20) about an axis of rotation (36), and
- the control edge (70, 76) of at least one control segment (58, 60) and/or the housing segment (64, 66) which interacts with this control segment (58, 60) are/is formed in such a way that the flow cross section (80, 80-1, 80-2, 80-3, 82-2) for hydraulic flow at this control segment (58, 60) varies in size according to different rotational positions of the control slide (14), wherein the control edge (70, 76) has, sectionally, in a direction of rotation (20)
- at least one axially outer edge section (74), and
- at least one axially inner edge section (72), which is axially inwardly offset relative to the axially outer edge section (74), **characterized in that** the axially inner edge section (72) extends at least in part at an angle of greater than 0° and less than 90° relative to the direction of rotation (20) along the direction of rotation (20).

2. Control-valve unit according to Claim 1, **characterized in that** the control slide (14) has multiple control segments (42, 56, 58, 60) which are arranged so as to be distributed in an axial direction (18), wherein the flow cross section (80, 80-1, 80-2, 80-3, 82-2) for hydraulic flow at at least one control segment (58, 60) varies in size according to different rotational positions of the control slide (14).

3. Control-valve unit according to either of the preceding claims, **characterized in that** the control slide (14) has at least two control segments (42, 56, 58, 60), wherein the control edge (68) of at least one control segment (56) and/or the housing segment (62) which interacts with this control segment (56) are/is formed in such a way that the flow cross section (78) for hydraulic flow at this control segment (56) is constant for different rotational positions of the control slide (14).

4. Control-valve unit according to one of the preceding claims, **characterized in that** at least one control segment is arranged as a regulation control element (56) in a mouth region (38) of the slide housing (34), which mouth region connects the slide housing (34) to the entry port (30).

5. Control-valve unit according to one of the preceding claims, **characterized in that** at least one control segment is arranged as an inlet control segment (42) hydraulically upstream of the working port (22, 24), for the control of hydraulic flow towards the working port (22, 24).

6. Control-valve unit according to one of the preceding claims, **characterized in that** at least one control segment is arranged as an outlet control segment (58, 60) hydraulically between the working port (22, 24) and the return port (26, 28), for the control of hydraulic flow towards the return port (26, 28).

7. Control-valve unit according to one of the preceding claims, **characterized in that** the axially inner edge section (72) extends in part at an angle of greater than 0° and less than 90° relative to the direction of rotation (20) along the direction of rotation (20) and in part parallel to the direction of rotation (20).

8. Control-valve unit according to one of the preceding claims, **characterized in that** the housing segment (64, 66) which interacts with the control segment (58, 60) has an axial extent which is greater than the greatest axial extent of the control segment (58, 60).

## Revendications

1. Unité de soupape de commande hydraulique (10) servant à la commande d'une charge de travail hydraulique, comportant
- plusieurs raccords hydrauliques (22, 24, 26, 28, 30) sous la forme
-- d'au moins un raccord d'entrée (30) servant au raccordement hydraulique à une pompe,
-- d'au moins un raccord de travail (22, 24) servant au raccordement hydraulique de la charge de travail, et
-- d'au moins un raccord de retour (26, 28) pouvant être raccordé à un réservoir hydraulique,
- d'un tiroir de commande (14) pouvant être transféré à différentes positions de travail dans une direction axiale (18) pour la commande du fluide hydraulique entre les raccords hydrauliques (22, 24, 26, 28, 30), et
- d'un logement de tiroir (34) entourant le tiroir de commande (14),
- le tiroir de commande (14) présentant au moins un segment de commande (42, 56, 58, 60), lequel est délimité dans la direction axiale (18) par une arête de commande (46, 68, 70, 76) et coopère avec un segment de logement (44, 62, 64, 66) axial du logement de tiroir (34) pour la commande d'une section transversale de flux (78, 80, 80-1, 80-2, 80-3, 82-2) pour le fluide hydraulique au niveau de ce segment de commande (42, 56, 58, 60),
- le tiroir de commande (14) pouvant être entraîné en rotation dans le sens de rotation (20) autour d'un axe de rotation (36), et
- l'arête de commande (70, 76) d'au moins un segment de commande (58, 60) et/ou le segment de logement (64, 66) coopérant avec ce segment de commande (58, 60) étant réalisés de telle sorte que la section transversale de flux (80, 80-1, 80-2, 80-3, 82-2) pour le fluide hydraulique au niveau de ce segment de commande (58, 60) est de taille différente en fonction de différentes positions en rotation du tiroir de commande (14), l'arête de commande (70, 76), dans le sens de rotation (20), dans certaines parties
- présentant au moins une partie d'arête (74) axialement extérieure, et
- présentant au moins une partie d'arête (72) axialement intérieure, laquelle est décalée axialement vers l'intérieur par rapport à la partie d'arête (74) axialement extérieure, **caractérisée en ce que** la partie d'arête (72) axialement intérieure s'étend le long du sens de rotation (20) au moins partiellement suivant un angle supérieur à 0° et inférieur à 90° par rapport au sens de rotation (20).

2. Unité de soupape de commande selon la revendication 1, **caractérisée en ce que** le tiroir de commande (14) présente plusieurs segments de commande (42, 56, 58, 60) disposés de manière répartie dans la direction axiale (18), la section transversale de flux (80, 80-1, 80-2, 80-3, 82-2) pour le fluide hydraulique au niveau d'au moins un segment de commande (58, 60) étant de taille différente en fonction de différentes positions en rotation du tiroir de commande (14).

3. Unité de soupape de commande selon l'une des revendications précédentes, **caractérisée en ce que** le tiroir de commande (14) présente au moins deux segments de commande (42, 56, 58, 60), l'arête de commande (68) d'au moins un segment de commande (56) et/ou le logement de segment (62) coopérant avec ce segment de commande (56) étant réalisés de telle sorte que la section transversale de flux (78) pour le fluide hydraulique au niveau de ce segment de commande (56) est constante en cas de positions en rotation différentes du tiroir de commande (14).

4. Unité de soupape de commande selon l'une des revendications précédentes, **caractérisée en ce qu'**au moins un segment de commande est disposé en tant que segment de commande de régulation (56) dans une région d'embouchure (38), reliant le logement de tiroir (34) au raccord d'entrée (30), du logement de tiroir (34).

5. Unité de soupape de commande selon l'une des revendications précédentes, **caractérisée en ce qu'**au moins un segment de commande est disposé en tant que segment de commande d'entrée (42) hydrauliquement en amont du raccord de travail (22, 24) pour la commande du flux hydraulique vers le raccord de travail (22, 24).

6. Unité de soupape de commande selon l'une des revendications précédentes, **caractérisée en ce qu'**au moins un segment de commande est disposé en tant que segment de commande de sortie (58, 60) hydrauliquement entre le raccord de travail (22, 24) et le raccord de retour (26, 28) pour la commande du flux hydraulique vers le raccord de retour (26, 28).

7. Unité de soupape de commande selon l'une des revendications précédentes, **caractérisée en ce que** la partie d'arête (72) axialement intérieure s'étend partiellement suivant un angle supérieur à 0° et inférieur à 90° par rapport au sens de rotation (20) le long du sens de rotation (20) et partiellement parallèlement au sens de rotation (20).

8. Unité de soupape de commande selon l'une des revendications précédentes, **caractérisée en ce que** le segment de logement (64, 66) coopérant avec le segment de commande (58, 60) présente une plus grande étendue axiale que la plus grande étendue axiale du segment de commande (58, 60).
